## Europäisches Patentamt
## European Patent Office
## Office européen des brevets

(19)

(11) Veröffentlichungsnummer : **0 141 994 B2**

(12) # NEUE EUROPÄISCHE PATENTSCHRIFT

(45) Veröffentlichungstag der neuen Patentschrift :
**14.08.91 Patentblatt 91/33**

(51) Int. Cl.⁵ : **H04Q 7/04, H04B 7/26**

(21) Anmeldenummer : **84111664.3**

(22) Anmeldetag : **28.09.84**

(54) **Mobiles Funknetz.**

(30) Priorität : **28.09.83 DE 3335128**

(43) Veröffentlichungstag der Anmeldung :
**22.05.85 Patentblatt 85/21**

(45) Bekanntmachung des Hinweises auf die
Patenterteilung :
**11.05.88 Patentblatt 88/19**

(45) Bekanntmachung des Hinweises auf die
Entscheidung über den Einspruch :
**14.08.91 Patentblatt 91/33**

(84) Benannte Vertragsstaaten :
**DE FR GB SE**

(56) Entgegenhaltungen :
**WO-A-80/01030**
**DE-B- 1 251 830**

(56) Entgegenhaltungen :
**DE-B- 2 204 431**
**DE-C- 3 012 484**
**GB-A- 1 298 032**
**US-A- 3 714 573**
**FREQUENZ, Heft 36, Nr. 4/5, 1982, Seiten
90-99, Berlin, DE; F. PERNICE: "Das Funkfernsprechnetz C der Deutschen Bundespost"**

(73) Patentinhaber : **Siemens Aktiengesellschaft
Wittelsbacherplatz 2
W-8000 München 2 (DE)**

(72) Erfinder : **Kammerlander, Karl
Wiesenstrasse 10
W-8190 Wolfratshausen (DE)**
Erfinder : **Haderer, Anton
Birkholzweg 10
W-8031 Gilching (DE)**
Erfinder : **Neyen, v.d., Hans-Jürgen, Dipl.-Ing.
Damaschkestrasse 63
W-8000 München 82 (DE)**

EP 0 141 994 B2

## Beschreibung

Die Erfindung bezieht sich auf ein mobiles Funknetz mit einer Anzahl Funkkonzentratoren in gegenseitiger räumlicher Anordnung nach Art eines Zellularsystems, bei dem jeweils eine fest vorgegebene Anzahl von einander unmittelbar benachbarten Funkzonen eine Funkzonengruppe bildet, in denen sich die insgesamt zur Verfügung stehenden Frequenzkanäle wiederholen, bei dem ferner wenigstens die funkorganisationsbezogene Signalisierung in digitaler Form zwischen den ortsfesten Funkkonzentratoren und den beweglichen Teilnehmerstationen über für Duplexbetrieb ausgelegte Organisationskanäle vorgenommen ist und in jedem der mit einer zentralen Steuereinheit für eine Funkdatensteuerung versehenen Funkkonzentratoren ein Messempfänger mit einer in das Synchronsystem der Funkkonzentratoren einbezogenen Steuerung vorgesehen ist.

Ein mobiles Funknetz dieser Art ist beispielsweise durch die DE-C-3 012 484 bekannt. Dabei erfolgt mittels Feldstärke und Entfernungsmessung und Abspeichern der Feldstärkewerte oder beider Werte eine Überwachung der Funkkanäle benachbarter Funkbereiche und über eine entsprechende Steuerung die Umschaltung beweglicher Teilnehmer in einen anderen Funkbereich.

Durch die WO 80/01030 ist ein System zur Übertragung von Funksignalen einschliesslich wenigstens eines vorgegebenen Tons mit einer Einrichtung zur Bestimmung der annähernden Entfernung bekannt, über die empfangene Funksignale gesendet worden sind. Es sind dabei eine Einrichtung zur Feststellung des Vorhandenseins oder Nichtvorhandenseins des vorgegebenen Tons, in den empfangenen Funksignalen und eine weitere Einrichtung vorhanden, die unter Ansprechen auf ein Ausgangssignal der Feststellungseinrichtung die Funktion der Bestimmungseinrichtung sperrt, wenn der Funksignalpegel so weit verringert ist, dass die Feststellungseinrichtung veranlasst wird, das Nichtvorhandensein des vorgegebenen Tons anzuzeigen.

Bei der Gestaltung der Funkzonen ergibt sich eine Problematik dadurch, dass einerseits die bodengebundene Funkausbreitung abhängig von Gelände und Bebauung zu unregelmässigen Feldstärke-Verteilungen und Funkzonengrenzen führt, andererseits die Funkzonen aber nach den Verteilungen der Funkverkehrsdichte gestaltet werden müssen. Die Konturen von Feldstärke und Verkehrsdichteverteilungen sind dabei nicht identisch.

Da ausserdem, und dies gilt besonders in bebauten Gebieten Volldeckung der Funkversorgung gefordert werden muss, sind die aus der Feldstärke-Verteilung resultierenden gegenseitigen Überlappungen der Funkzonen in jedem Fall unvermeidlich.

Die Parameter der Funkausbreitung sind gegeben durch die mittlere Funkfelddämpfung, welche eine Funktion der Frequenz f, der Entfernung E, der Geländewelligkeit und der Antennenhöhe ist, durch die log-normal Verteilung, die die ortsabhängigen Abweichungen von der mittleren Funkfelddämpfung, bedingt durch die topographische Struktur des Geländes sowie dessen Bewuchs und Bebauung, angibt, sowie durch das Rayleigh-Fading, das infolge der Fahrzeugbewegung beim Durchfahren der durch Mehrwegeausbreitung am Boden entstehenden Stellenverteilungen entsteht und zu kurzen rayleighverteilten Einbrüchen der Empfangsfeldstärke führt.

Zur Definition der Grenze des Versorgungsbereiches einer Funkzone muss also neben der mittleren Funkfelddämpfung die log-normal Verteilung und das Rayleigh-Fading berücksichtigt werden. So ist für die log-normal Verteilung entsprechend der gewünschten Randversorgung im Versorgungsbereich ein Zuschlag von ca. 15 dB für 95% Ortswahrscheinlichkeit zu berücksichtigen.

Wird in einem mit Kleinzonen versorgten Ballungsgebiet höchster Verkehrsdichte innerhalb einer durch die Verkehrsdichte definierten Funkzone eine Randversorgung von 95% gefordert, so überschreiten die 50%-Versorgungslinien und die 5%-Versorgungslinien den Versorgungsbereich beträchtlich. Gegenseitige Überlappung von Feldstärke-Versorgungsgebieten sind unvermeidlich.

Zur wirtschaftlichen Funkversorgung grosser Ballungsgebiete muss eine optimale Wiederbenutzbarkeit der zur Verfügung stehenden Funkkanäle erzielt werden. Dies führt zur minimalen Zahl der notwendigen Funkstützpunkte und zur grössten Kanalbündelstärke innerhalb der einzelnen Funkzonen.

Zur Erzielung eines günstigen wirtschaftlichen Aufbaus ist es sinnvoll, das vorhandene Kanalvolumen auf eine minimale Anzahl von Funkzonen zu verteilen. Jedoch ist es so, dass bereits bei einer Aufteilung auf sieben Funkzonen eine Überstrahlung des gesamten clusters mit einer relativ hohen Wahrscheinlichkeit vorkommt und damit auch eine hohe Wahrscheinlichkeit für Gleichkanalstörungen besteht. Auch für die weniger wirtschaftliche Aufteilung auf mehr als sieben Funkzonen ändern sich die Verhältnisse nicht entscheidend. Wegen dieser Eigenschaft der Feldstärke-Verteilung müssen insbesondere in Kleinzonen die systemtechnisch möglichen Massnahmen zur Erzielung minimaler Gleichkanalstörung bei maximal möglicher Wiederbenutzung der Funkkanäle ausgeschöpft werden.

Die systemtechnisch möglichen Massnahmen zur Minimierung der Gleichkanalstörungen, die ausschliesslich der Minimierung der Wiederbenutzungsabstände dienen, zielen darauf ab, Kanäle ausschliesslich nur innerhalb der verkehrsmässig zu versorgenden Funkzonen zu benutzen und deren Benutzung in ausserhalb liegenden Überlappungsbereichen, unabhängig von der dort erzielbaren Signalqualität, zu unterbinden.

Da für die Realisierung der systemtechnischen Massnahmen apparative Aufwendungen auf der ortsfesten Seite notwendig sind, ist es sinnvoll, sie nur in Fällen kritischer Verkehrsdichte anzuwenden. Die kritische Verkehrsdichte ist dann erreicht, wenn alle verfügbaren Kanäle innerhalb einer Funkzonengruppe von sieben Funkzonen mit maximalem Radius vergeben werden müssen. Dann besteht die Notwendigkeit, alle Kanäle auch in den benachbarten Funkzonengruppen zu wiederholen. Infolge der topographischen Unregelmässigkeiten des Geländes können dabei bereits merkliche gegenseitige Überlappungen auftreten, die zu Gleichkanalstörungen führen.

Soweit die Benutzung der Kanäle in ländlichen Gebieten nur in Verkehrsschwerpunkten geschieht und die Verkehrsdichte zu den Funkzonenrändern hin und in den Überlappungsbereichen weit absinkt, ist die Gleichkanalstörung durchaus noch vernachlässigbar. Sobald aber in grossflächigen Industriegebieten oder Vorstadtgebieten eine annähernd homogene Verkehrsverteilung auftritt, steigt die Wahrscheinlichkeit der Gleichkanalstörung bei gleicher mittlerer Verkehrsdichte zwangsläufig an.

Steigt die Verkehrsdichte über den kritischen Wert an, so können, da alle Funkkanäle bereits vergeben sind, nur noch die Radien der Funkzonen verkleinert werden, um eine höhere Versorgungsdichte zu erzielen. Mit der Verkleinerung der Funkzonenradien werden jedoch auch die Sendeleistungen reduziert, um die feldstärkemässig versorgte Fläche zu verringern. Um dabei Versorgungslücken mit Sicherheit auszuschliessen, dürfen die Sendeleistungen nicht proportional mit den Radien reduziert werden. Damit steigt die Wahrscheinlichkeit von Gleichkanalstörungen an.

Die Grenzen der Funkzonen können dabei also grundsätzlich nicht entsprechend der jeweiligen Irregularität der Ausbreitung festgesetzt werden, sondern müssen entsprechend der Verkehrsdichte je nach verfügbarer Kanalkapazität dimensioniert werden. Es ist daher erforderlich, die verkehrsmässig definierte Versorgungsgrenze von Funkzonen detektieren zu können.

Es gibt grundsätzlich drei verschiedene Arten von Funkzonengrenzen, die mit unterschiedlichen Mitteln detektiert werden müssen, nämlich die ausbreitungsbedingte Funkzonengrenze, die aufgrund der topographischen Unregelmässigkeiten keineswegs ein zusammenhängendes Einzelgebilde ist, die störungsbedingte Funkzonengrenze, die durch das minimale Signal zu Geräuschverhältnis des Empfangssignals definiert ist, und die verkehrsbedingte Funkzonengrenze.

Die verkehrsbedingte Funkzonengrenze ist durch ein bestimmtes Verkehrsaufkommen definiert, das besonders in Ballungsgebieten, wo Kleinzonen notwendig sind, mit ausreichender Servicequalität an allen Orten versorgt werden muss. Es werden dabei die ausbreitungsgegebenen Versorgungsflächen nur in einem, den verkehrsmässigen Forderungen entsprechenden, definiert eingeschränkten Areal benutzt und zur Minimierung der Gleichkanalstörung die Kanalbenutzung in den gegenseitigen Überlappungsgebieten unterbunden.

Der Erfindung liegt die Aufgabe zugrunde, eine Lösung für die zur Detektion von Funkzonengrenzen am besten geeignete verkehrsmässig bedingte Funkzonengrenze anzugeben.

Diese Aufgabe wir gemäss der Erfindung in der Weise gelöst, dass zur Ermittlung der Funkzonengrenze zweier aneinandergrenzender Funkzonen als Kriterium zur Umschaltung beweglicher Teilnehmer in eine andere Funkzone unter Verwendung des an sich bekannten Differenzentfernungsmeßverfahrens nach dem Phasenvergleichsprinzip eine relative Entfernungsmessung durchgeführt wird, welche den Abstand des beweglichen Teilnehmers zu zwei oder mehreren Funkkonzentratoren durch Auswertung der Phasendifferenz der mit gleicher Bezugsphase ausgesendeten Signale der Funkkonzentratoren vergleicht mit den in den Funkkonzentratoren festgelegten und über Funk signalisierten Zellgrenzbewertungsmassen, und dass die Ermittlung der Funkzonengrenze im Zustand der Betriebsbereitschaft der Funkteilnehmergeräte im Organisationskanal durch den beweglichen Teilnehmer selbst und für die in Verbindung befindlichen Funkteilnehmergeräte dies in den Sprechkanälen unter Verwendung des Messempfängers der Funkkonzentratoren durchgeführt wird.

Der Hauptvorteil der relativen Entfernungsmessung im Organisationskanal und im Sprechkanal liegt in den gleichartigen Wirkungsmechanismen und Kriterien, welche die deckungsgleiche Detektion der Funkzonengrenzen in beiden Fällen garantieren. Damit können die verkehrsbedingten Parameter der Funkzonengrenzen in einem Vorgang definiert und programmiert werden. Aufgrund der Deckungsgleichheit ist schon das betriebsbereite Funkteilnehmergerät immer der richtigen Funkzone (Funkkanalbündel) zugeordnet. Darüber hinaus erkennt das Funkteilnehmergerät bereits beim Einschalten, während des Synchronisiervorganges die zur Erstmeldung absolut richtige Funkzone.

Vorteilhafte Ausgestaltungen und Weiterbildungen des Anmeldungsgegenstandes sind in den Unteransprüchen angegeben. Dabei geben die Ansprüche 2 und 4 jeweils eine vorteilhafte Ausgestaltung für die relative Entfernungsmessung in betriebsbereiten und in Betrieb befindlichen Funkteilnehmergeräten an.

Nachstehend wird die Erfindung anhand von in der Zeichnung dargestellten Ausführungsbeispielen näher erläutert.

Es zeigen :

Fig. 1 in einem Zeigerdiagramm die Bewertung der Phasendifferenz durch das Funkteilnehmergerät,

Fig. 2 die Detektion der Mittellinie bei Aussendung gleicher Radien,

Fig. 3 die Lage der Funkzonengrenze bei Aussendung unterschiedlicher Bewertungsradien,

Fig. 4 die Anwendung der relativen Entfernungsmessung in regelmässigen Funkzonengruppen,

Fig. 5 die Funkzonengrenze in einer unregelmässigen Verteilung mit gegenseitiger Überlappung,

Fig. 6 den unmittelbaren Übergang von Grosszonen in Kleinzonen,

Fig. 7 die individuelle Funkzonengestaltung durch funkzonenspezifische Bewertung der umgebenden Funkzonen und

Fig. 8 und 9 in einem Zeigerdiagramm das Prinzip der relativen Entfernungsmessung in den Sprechkanälen.

Die Detektion von Benutzungsgrenzen wird im Bereich ausreichender Empfangsqualität lediglich durch die Entfernungsmessung sichergestellt. Die Entfernungsmessung kann als absolute Messung durchgeführt werden, deren einfachste Form die Laufzeitmessung ist, bei der die Signal-Laufzeit im Funkfeld gemessen wird. Hierbei ist aber lediglich die Definition einer einheitlichen richtungsunabhängigen Entfernung möglich, so dass sich nur kreisförmige Funkzonen gestalten lassen. Bei Variation der Verkehrsdichte und damit der Funkzonenradien, Abweichung der verkehrsbedingten Funkzonen von der Kreisform und Zusammentreffen von Kombinationen unterschiedlicher Funkzonengrössen kann mit der Beschreibung von Kreisen eine adequate Ausgabenlösung nicht erreicht werden.

Die unter mobilen Bedingungen stattfindende absolute Entfernungsmessung setzt woraus, dass der Signaldialog zwischen Funkkonzentrator und Funkteilnehmergerät fortlaufend besteht. Dies ist aber auschliesslich in den Sprechkanälen der Fall. Für den weitaus grösseren Teil der sich in Gesprächsbereitschaft befindlichen Funkteilnehmergeräte fehlt das Entscheidungskriterium, da der Bereitschaftsbetrieb in den Organisationskanälen keine absolute Entfernungsmessung zulässt.

Beim vorliegenden Funknetz erfolgt die Detektion der verkehrsbedingten Funkzonengrenze durch eine relative Entfernungsmessung, bei der im Gegensatz zur absoluten Entfernungsmessung der Abstand zu zwei oder mehreren Funkkonzentratoren verglichen, die Phasendifferenz ihrer Signale gebildet und diese mit den für diese Funkkonzentratoren festgelegten und über die Luft signalisierten Versorgungsradien verglichen und ausgewertet wird. Die relative Entfernungsmessung erlaubt es, die Funkzonengrenzen zu allen umgebenden Funkzonen individuell zu gestalten. Voraussetzung für die Richtigkeit der Phasenauswertung ist dabei die phasengleiche Aussendung aller zu bewertenden Signale. Dies bedeutet, dass die Funkkonzentratoren untereinander synchronisiert sein müssen. Dieses Erfordernis ist beim synchronisierten Betrieb in Ballungsgebieten erfüllt.

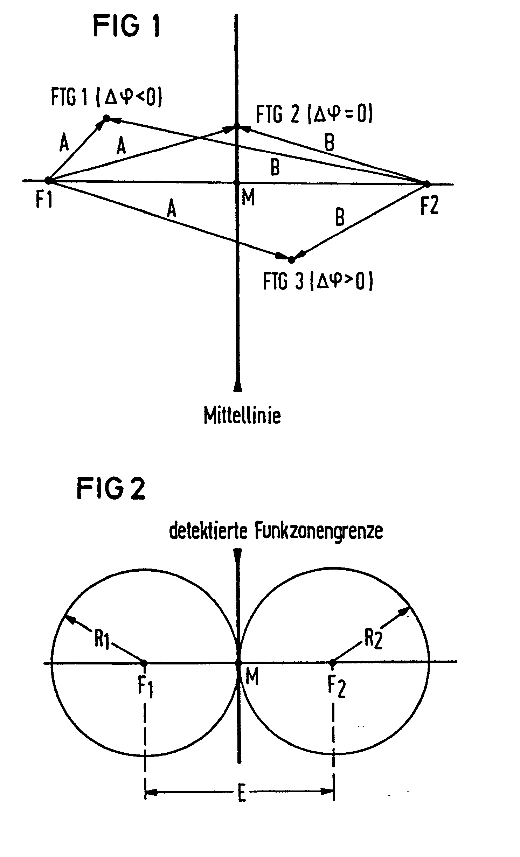

Anhand der Figuren 1 bis 3 wird zunächst die relative Entfernungsmessung des betriebsbereiten Funkteilnehmergerätes erläutert, die über den Organisationskanal erfolgt. Bei der relativen Entfernungsmessung ist zur richtigen Auswertung der Funkkonzentrator-Signalphasen lediglich Empfangsbetrieb notwendig. Damit kann diese Messung von allen betriebsbereiten Funkteilnehmergeräten, die in diesem Zustand nicht senden, völlig unabhängig voneinander durchgeführt werden. Vorteilhaft ist dabei der zeitgeteilte Organisationskanal, bei dem alle umgebenden Funkzonen auf einer einzigen Frequenz und völlig gleichgewichtig mit höchstmöglicher Entscheidungsgenauigkeit ausgewertet werden.

Die von den Funkkonzentratoren F1 und F2 ausgesendeten Signale gleicher Bezugsphase, die individuelle Bewertungsparameter (Zellgrenzbewertungsmasse) der Funkzone enthalten, treffen abhängig vom Aufenthaltsort eines Funkteilnehmergerätes FTG, das sich in einer mobilen Station befindet, typischerweise zu unterschiedlichen Zeiten an dessen Empfänger ein. Lediglich wenn sich das Funkteilnehmergerät FTG genau auf der Mittellinie befindet, herrscht Phasengleichheit. Die beiden Funkkonzentratoren F1 und F2 senden in ihren Signalen die einprogrammierten Bewertungsmasse in Form der Radien R1 und R2 aus, die ihrer verkehrsbedingten Funkzonengrenze entsprechen. Sie setzen damit das Funkteilnehmergerät FTG in die Lage, die Phasendifferenz zu bewerten und auch von der Mittellinie abweichende Funkzonengrenzen zu erkennen.

Das Funkteilnehmergerät FTG ist nicht in der Lage, die absolute Laufzeit beider Signale zu bewerten. Es bewertet lediglich ihre Differenz unabhängig von der Laufzeit. Dies führt dazu, dass im Falle gleicher Bewertungsmasssignalisierung der beiden Funkkonzentratoren F1 und F2 für ihren Funkzonenradius R1 bzw. R2 (Radiendifferenz $\Delta = 0$, d.h. Abstand A = Abstand B, $\Delta\phi = 0$ beim Funkteilnehmergerät FTG2 im Diagramm nach Fig. 1) das Funkteilnehmergerät FTG die Funkzonengrenze immer in der Mitte M zwischen zwei Funkkonzentratoren detektiert wird, unabhängig von deren wirklicher Entfernung E (vgl. Fig. 2).

Sobald zwei benachbarte Funkkonzentratoren aber unterschiedliche Bewertungsradien aussenden, wie dies die prinzipielle Darstellung nach Fig. 1 für die Positionen der Funkteilnehmergeräte FTG 1 und FTG3 zeigt, schiebt sich der Mittelpunkt M entsprechend der halben Radiendifferenz

$$\Delta/2 = \frac{R1-R2}{2}$$

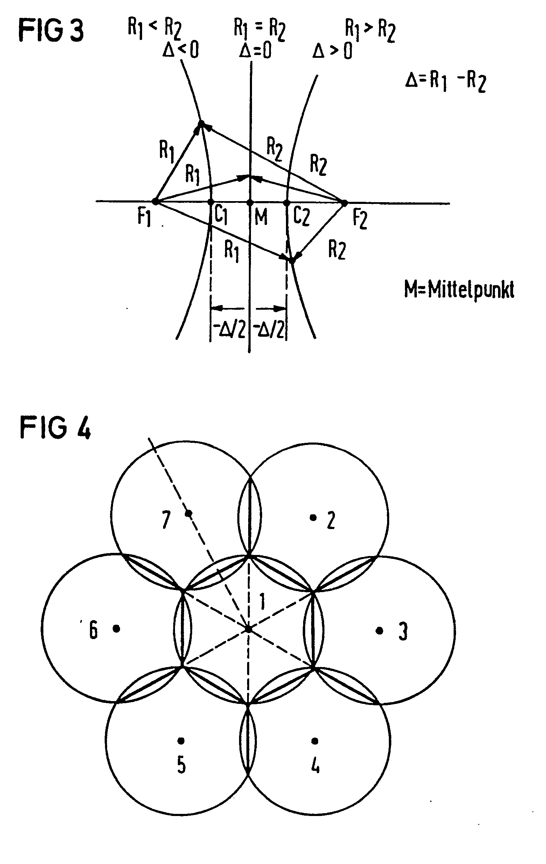

nach links oder rechts, wobei die ursprüngliche Mittengerade in Hyperbeln übergeht (vgl. Fig. 3). Mit C1, C2 sind dabei die Scheitelpunkte der Hyperbeln bezeichnet. Die Mittelpunkte der Funkzonen, die Funkkonzentratoren F1 und F2, sind zugleich die Brennpunkte 1,2 der Hyperbeln. Auf den geometrischen Bildungsmechanismus für diese Hyperbeln soll an dieser Stelle nicht näher eingegangen werden.

Fig. 4 zeigt eine Funkbereichsgruppe mit einem regelmässigen cluster aus sieben sich überlappenden Funkzonen 1...7. Bei Anwendung der relativen Entfernungsmessung werden sechseckige Funkzonen detektiert, die in der Figur mit verstärken Linien eingetragen sind. Die strichlierten Linien zeigen an, wie bei Ausfall der mittleren Funkzone oder gewollter Nachbarschaftsunterstützung das innere Sechseck verschwindet und automatisch in eine Dreiecksverteilung übergeht. Dabei werden also die entsprechend strichliert gezeichneten Dreiecke der ursprünglichen Funkzone 1 von der jeweils benachbarten Funkzone mitversorgt.

Mit der Hyperbelbildung durch relative Entfernungsmessung ist auch die wirkungsvolle Gestaltung verkehrsbedingter Funkzonengrenzen mit unregelmässigen Funkzonengrössen unabhängig von deren Sendeleistung möglich.

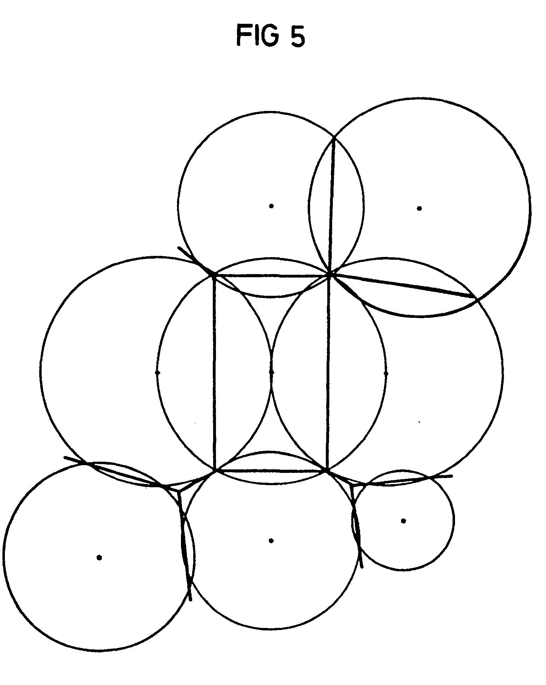

Bei der in der Praxis unregelmässigen Verteilung der Funkkonzentration und gegenseitiger Überlappung der Funkzonen können auch stark vom regelmässigen Sechseck abweichende Funkzonen entstehen. Ein Beispiel hierfür zeigt Fig. 5 mit einer viereckigen Funkzone. Die einzelnen Funkzonengrenzen sind hier wiederum mit starken Linien eingezeichnet.

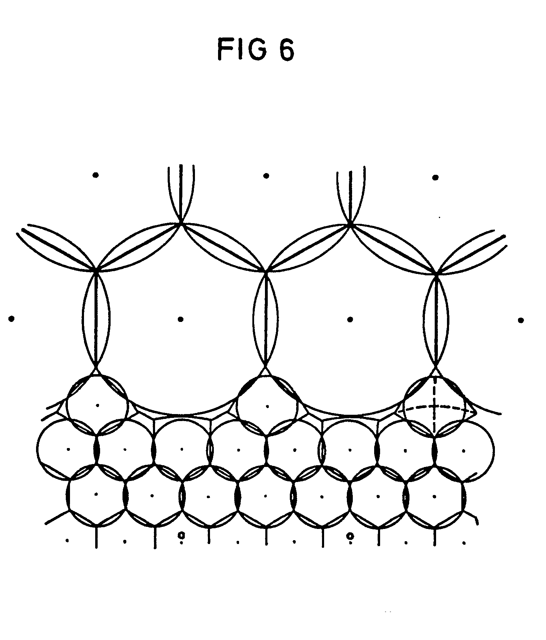

Einen wegen der Feldstärke-Verteilungen allgemein schwierigen Fall stellt der unmittelbare Übergang von Grosszonen in Kleinzonen dar. Das Ausführungsbeispiel nach Fig. 6 zeigt, dass aber auch dieser Fall mit der relativen Entfernungsmessung gut beherrschbar ist.

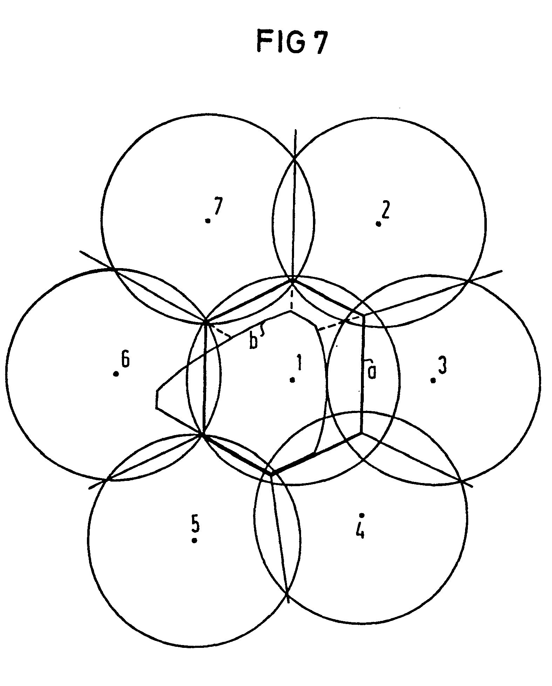

Eine weitere Erhöhung der Flexibilität zur Funkzonengestaltung ist in schwierigen Fällen dadurch möglich, dass bestimmte Funkkonzentratoren die Radienbewertung der umgebenden Funkkonzentratoren den bei ihnen befindlichen Teilnehmern vorschreiben, wobei die Signalisierung z.B. in den Leerrufen erfolgen kann. Mit dieser Massnahmen können in weiten Grenzen unsymmetrische Funkzonen realisiert werden, wie dies die Linie b in Fig. 7 zeigt. Dabei wird für die einzelnen Funkzonen 1 bis 7 eine Grösse von 12, 19, 20, 12, 12,4 bzw. 18 km vorgegeben. Der Linienzug a in derselben Figur zeigt die Funkzone bei Bewertung des von den Nachbarn signalisierten Wertes. Eine solche individuelle Funkzonengestaltung durch funkzonenspezifische Bewertung der umgebenden Funkzonen ist besonders vorteilhaft für Funkkonzentratoren in Ballungsgebieten.

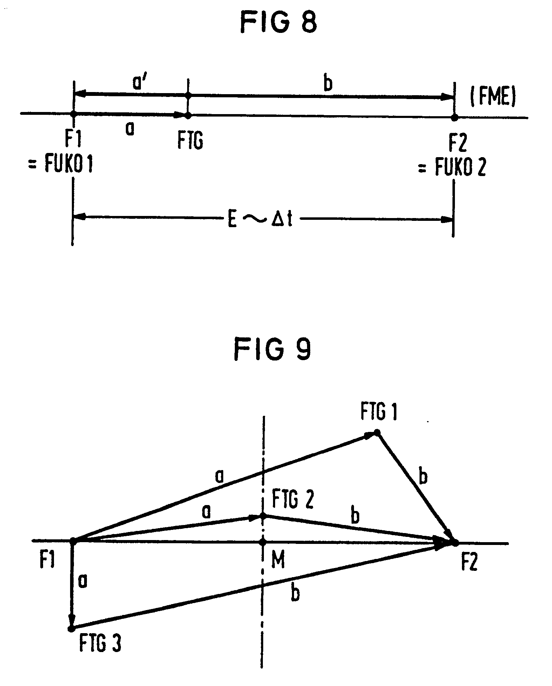

Anhand der Diagramme nach den Figuren 8 und 9 wird die relative Entfernungsmessung in den Sprechkanälen erläutert. Für ihre Durchführung wird der Funkmessempfänger FME herangezogen, der der Umschaltung von Verbindungen an der Funkzonengrenze dient. Er ist Bestandteil jedes Funkkonzentrators und führt fortwährend Feldstärkemessungen auf den in den Nachbarfunkzonen zugeteilten Kanälen durch. Übersteigt die Feldstärke in einem Kanal die Identifizierungsschwelle, ist also eine ausreichende Empfangsqualität gegeben, so wird das entsprechende Funkteilnehmergerät FTG identifiziert. Im Rahmen der Identifizierung wird auch die Entfernung des Funkteilnehmergerätes festgestellt. Die Verbindungsumschaltung erfolgt nach verschiedenen Kriterien, wobei die Entfernung eines der Umschaltkriterien darstellt.

Das Prinzip der relativen Entfernungsmessung mit dem Funkmessempfänger zeigt Fig. 8. Dabei sind ein Funkkonzentrator F1 und ein Funkkonzentrator F2 vorgesehen, die im Abstand E angeordnet sind und eine absolut gleiche Bezugsphase besitzen. Diese wird durch den Empfang des Organisationskanals von Funkkonzentrator F1 an Funkkonzentrator F2 unter Berücksichtigung der Entfernung E bzw. der Signallaufzeit $\Delta t$ gewonnen. Der am Funkkonzentrator F2 befindliche Funkmessempfänger FME misst die Laufzeit b des Phasensignals des mit dem Funkkonzentrator F1 in Verbindung stehenden Funkteilnehmergerätes FTG, das sich in diesem Beispiel auf der geraden Verbindungslinie zwischen den beiden Funkkonzentratoren F1 und F2 befindet. Wird die im Funkteilnehmergerät FTG entstehende Gerätelaufzeit gleich Null gesetzt oder entspechend berücksichtigt, so erreicht ein vom Funkkonzentrator F1 ausgesendetes Signal nach der ersten Laufzeit a das Funkteilnehmergerät und nach der zweiten Laufzeit b den Funkmessempfänger FME im Funkkonzentrator F2. Die Summenlaufzeit $\Delta t$ entspricht grundsätzlich der Summe von a + b. Für die Summe $\Delta t = a + b$ ist es dabei unerheblich, wie weit das Funkteilnehmergerät FTG seine Position auf der Geraden zwischen den Funkkonzentratoren F1 und F2 verändert, sie bleibt konstant. Aus der Laufzeit b am Funkkonzentrator F2 allein kann die Entfernung des Funkteilnehmergerätes FTG zum Funkkonzentrator F2 nicht ermittelt werden.

Da aber das Signal des Funkteilnehmergerätes FTG mit der Laufzeit a', die exakt der Laufzeit a entspricht, vom ersten Funkkonzentrator F1 wieder empfangen wird, kann dieser aus 1/2 (a + a') = a die absolute Entfernung des Funkteilnehmergerätes FTG bestimmen. Der Funkkonzentrator F1 signalisiert den Wert der Laufzeit a an das Funkteilnehmergerät FTG, das diesen wie eine Relaisstation wieder aussendet. Damit gelangt nun auch der Funkmessempfänger FME im zweiten Funkkonzentrator F2 in Besitz der Grösse von a. Im Funkmessempfänger FME wird nun von der Summenlaufzeit a + b = $\Delta t$ der Wert a subtrahiert und so der tatsächliche Laufzeitwert b bzw. die Entfernung des Funkteilnehmergerätes FTG vom zweiten Funkkonzentrator F2 bestimmt.

Das Verfahren ist auch für alle Orte ausserhalb der Verbindungsgeraden vom Funkkonzentrator F1 und Funkkonzentrator F2 anwendbar, weil aus der Gleichung (a + b) - a = b die echte Entfernung in jedem Fall bestimmt werden kann.

In Fig. 9 sind in einem Diagramm verschiedene Varianten dargestellt, bei denen sich das Funkteilnehmergerät FTG1, FTG2 bzw. FTG3 an einem Ort ausserhalb der geraden Verbindung der beiden Funkkonzentratoren F1, F2 befinden.

Ein Vergleich der Situation des Funkteilnehmergerätes FTG von Fig. 8 mit der von Fig. 1 zeigt, dass in beiden Fällen der gleiche Wirkungsmechanismus vorliegt. In den Sprechkanälen verfügt der Funkmessempfänger über die gleiche Information, nämlich die Differenz a - b, wie das Funkteilnehmergerät FTG im Organisationskanal und kann damit unter Zuhilfenahme der im Funkkonzentrator bekannten Radiendifferenz zu anderen Funkzonen die relative Entfernungsbewertung in den Sprechkanälen deckungsgleich mit den betriebsbereiten Funkteilnehmergeräten FTG durchführen. Der Messempfänger ist dabei so ausgelegt, dass im Mittel der Entfernungswert jeder Verbindung besipielsweise einmal in 10 s gemessen wird.

Überschreitet ein Funkteilnehmergerät FTG die vordefinierte Funkzonengrenze, so leiter der entsprechende Funkmessempfänger die Umschaltung ein. Zur Einleitung der Umschaltung, bei der es sich also um eine Zwangsumschaltung handelt, ist der Funkmessempfänger FME in der Lage, weil er aus der Verbindungsidentifizierung auch die entsprechende Funkkonzentrator- und Teilnehmernummer kennt.

Die Zwangsumschaltung der Funkteilnehmergeräte FTG beim Erreichen der Funkzonengrenze ist von grossem Vorteil, weil die sonst bei Umschaltungen erforderliche Anfrage an alle umliegenden Funkkonzentratoren entfällt und damit der Datenverkehr aus dieser Sicht minimiert wird.

Liegt eine Wegstrecke so, dass sie entlang einer Funkzonengrenze führt und zu erhöhen und konfusen Ummeldungen und Umschaltungen führt, so kann durch eine kleine Verlagerung der programmierbaren Grenzparameter ($\Delta$ = R1 - R2) die Lage beruhigt werden.

Es soll mit Sicherheit verhindert werden, dass ein Funkteilnehmergerät, das gerade umgeschaltet wurde durch eine Verbindungsumschaltung, sein Gespräch beendet und aufgrund von Auslösungstoleranzen sich gleich wieder zurückmeldet. Deshalb ist es zweckmässig, der Umschaltung gegenüber der Ummeldung etwas grössere Radien zu geben. Das bedeutet, dass die Umschaltung zeitlich verzögert erfolgt gegenüber dem Zeitpunkt, der aufgrund der Bewertungskriterien für die Ummeldung angegeben wird. Da dieser Vorgang gegenseitig zwischen den Funkzonen, d.h. in beiden Richtungen erfolgen muss, tritt für die Umschaltung ein als Hysterese fungierender geringer Toleranzschlauch symmetrisch um die Ummeldelinien auf.

## Patentansprüche

1. Mobiles Funknetz mit einer Anzahl Funkkonzentratoren (F) in gegenseitiger räumlicher Anordnung nach Art eines Zellularsystems, bei dem jeweils eine fest vorgegebene Anzahl von einander unmittelbar benachbarten Funkzonen eine Funkzonengruppe bilden, in denen sich die insgesamt zur Verfügung stehenden Frequenzkanäle wiederholen, bei dem ferner wenigstens die funkorganisationsbezogene Signalisierung in digitaler Form zwischen den ortsfesten Funkkonzentratoren (F) und den beweglichen Teilnehmerstationen (FTG) über für Duplexbetrieb ausgelegte Organisationskanäle vorgenommen ist und in jedem der mit einer zentralen Steuereinheit für eine Funkdatensteuerung versehenen Funkkonzentratoren (F) ein Messempfänger (FME) mit einer in das Synchronsystem der Funkkonzentratoren (F) einbezogenen Steuerung vorgesehen ist, **dadurch gekennzeichnet**, daß zur Ermittlung der Funkzonengrenze zweier aneinandergrenzender Funkzonen als Kriterium zur Umschaltung beweglicher Teilnehmer (FTG) in eine andere Funkzone unter Verwendung des an sich bekannten Differenzentfernungsmeßverfahrens nach dem Phasenvergleichsprinzip eine relative Entfernungsmessung durchgeführt wird, welche den Abstand des beweglichen Teilnehmers (FTG) zu zwei oder mehreren Funkkonzentratoren (F) durch Auswertung der Phasendifferenz der mit gleicher Bezugsphase ausgesendeten Signale der Funkkonzentratoren (F) vergleicht mit den in den Funkkonzentratoren (F) festgelegten und über Funk signalisierten Zellgrenzbewertungsmassen, und daß die Ermittlung der Funkzonengrenze im Zustand der Betriebsbereitschaft der Funkteilnehmergeräte (FTG) im Organisationskanal durch den beweglichen Teilnehmer selbst und für die in Verbindung befindlichen Funkteilnehmergeräte (FTG) dies in den Sprechkanälen unter Verwendung des Meßempfängers (Funkmeßempfänger FME) der Funkkonzentratoren (F) durchgeführt wird.

2. Funknetz nach Anspruch 1, dadurch gekennzeichnet, dass bei der relativen Entfernungsmessung im Zustand der Betriebsbereitschaft des Funkteilnehmergerätes (FTG) im Empfänger des Funkteilnehmergerätes (FTG) die Differenz der Laufzeit der von den Funkkonzentratoren (F) in den Zeitschlitzen des Organisationskanals ausgesendeten Signale gleicher Bezugsphase, die Informationen über die ihrer verkehrsbedingten Funkzonengrenze entsprechenden Bewertungsmasse enthalten, verglichen wird mit der Auswertung der Differenz dieser Bewertungsmasse, als deren Ergebnis bei gleicher Bewertungsmasssignalisierung die Funkzonengrenze als Gerade
in der Mitte zwischen zwei Funkkonzentratoren (F1,
F2) und bei unterschiedlicher Bewertungsmasssignalisierung als Hyperbel detektiert wird, deren Scheitelpunkt (C1, C2) entsprechend der halben Bewertungsmassdifferenz nach der einen oder anderen Seite der
Mittengeraden bei gleichen Bewertungsmassen verschoben ist.

3. Funknetz nach Anspruch 2, dadurch gekennzeichnet, dass bestimmte Funkkonzentratoren (F) die
Bewertungsmasse der umgebenden Funkkonzentratoren (F) den bei ihnen befindlichen Teilnehmern
(TLG) vorschreiben.

4. Funknetz nach Anspruch 1, dadurch gekennzeichnet, dass bei der relativen Entfernungsmessung
bei in Betrieb befindlichen Funkteilnehmergeräten
(FTG) die Summenlaufzeit (Δt = a + b) des Signals
eines mit einem Funkteilnehmergerät (FTG) in Verbindung stehenden ersten Funkkonzentrators (F1)
zwischen diesem Funkkonzentrator (F1) und dem
Funkteilnehmergerät (FTG) und zwischen dem Funkteilnehmergerät (FTG) und einem zweiten, benachbarten Funkkonzentrator (F2) in Bezug auf die
synchrone Sendephase des zweiten Funkkonzentrators im Funkmessempfänger des zweiten Funkkonzentrators (F2) ermittelt wird und aus der Differenz der
Summenlaufzeit (a + b) und der Laufzeit des Signals
(a) zwischen dem Funkteilnehmergerät (FTG) und
dem ersten Funkkonzentrator (F1) die Laufzeit (b)
und damit Entfernung zwischen dem Funkteilnehmergerät (FTG) und dem zweiten Funkkonzentrator (F2)
bestimmt und, unter Berücksichtigung der Bewertungsmasse, eine Verbindungsumschaltung veranlasst wird, sobald der bewegliche Teilnehmer die
Funkzonengrenze zur Funkzone des zweiten Funkkonzentrators (F2) überschreitet.

5. Funknetz nach Anspruch 4, dadurch gekennzeichnet, dass die Laufzeit (a) zwischen dem ersten
Funkkonzentrator (F1) und dem Funkteilnehmergerät
(FTG) durch Halbierung der Laufzeit (a + a) des vom
Funkkonzentrator (F1) ausgesendeten und vom
Funkteilnehmergerät (FTG) wieder zurückgesendeten Signals im Funkkonzentrator (F1) bestimmt wird
und dass der derart ermittelte Laufzeitwert vom ersten
Funkkonzentrator (F1) zum Teilnehmergerät (FTG)
und von diesem zum zweiten Funkkonzentrator (F2)
weitergeleitet wird.

6. Funknetz nach einem der vorhergehenden
Ansprüche, dadurch gekennzeichnet, dass die
Bewertungsmasse der Funkzonen als Kriterium für
die Umschaltung grösser bemessen sind als die für
die Ummeldung von einer in eine benachbarte Funkzone.

## Claims

1. Mobile radio network having a number of radio
concentrators (F) in a reciprocal spatial arrangement
according to the manner of a cellular system, in which,
in each case, a rigidly predetermined number of radio
zones that are immediately adjacent to one another
form a radio zone group, in which all the available frequency channels are repeated, in which, furthermore,
at least the signalling related to the radio organisation
is implemented in digital form between the stationary
radio concentrators (F) and the mobile subscriber stations (FTG) via organisation channels designed for
duplex operation, and in each of the radio concentrators (F), equipped with a central control unit for
radio data control, a measurement receiver (FME)
having a control arrangement incorporated into the
synchronising system of the radio concentrators (F) is
provided, characterised in that, to determine the radio
zone boundary between two mutually adjacent radio
zones, as a criterion for switching-over mobile subscribers (FTG) into a different radio zone using the
already known differential distance measurement
method according to the principle of phase comparison, a relative distance measurement is carried out,
which compares the distance of the mobile subscriber
(FTG) from two or more radio concentrators (F), by
assessing the phase difference of the signals from the
radio concentrators (F), transmitted at a common
reference phase, with the cell boundary assessment
dimensions specified in the radio concentrators (F)
and signalled by radio, and in that the determination
of the radio zone boundary in the standby mode of the
radio subscriber units (FTG) in the organisation channel is carried out by the mobile subscriber himself and
this is carried out in the speech channels using the
measurement receiver (radio measurement receiver
FME) of the radio concentrators (F) for the radio subscriber units (FTG) which are connected.

2. Radio network according to Claim 1, characterised in that, in the case of the relative distance
measurement for the radio subscriber unit (FTG) in
the standby mode, in the receiver of the radio subscriber unit (FTG) the difference in the propagation
time of the common reference phase signals transmitted by the radio concentrators (F) in the time slots of
the organisation channel, which signals contain the
information on the assessment dimensions
associated with their traffic-related radio zone boundary, is compared with the assessment of the difference between these assessment dimensions, such
that, in the case of equal assessment dimension signalling, the radio zone boundary is detected as a
straight line in the centre between two radio concentrators (F1, F2), and is detected as a hyperbola in the
case of different assessment dimension signalling,
the apex of which hyperbola (C1, C2) is displaced to
one side or the other of the centre lines for equal assessment dimensions corresponding to half the difference in the assessment dimension.

3. Radio network according to Claim 2, characterised in that specific radio concentrators (F) prescribe the assessment dimensions of the surrounding radio concentrators (F) to the subscribers (TLG) located in them.

4. Radio network according to Claim 1, characterised in that in the case of the relative distance measurement for in-use radio subscriber units (FTG), the sum of the propagation time ($\Delta t = a + b$) of the signal of a first radio concentrator (F1), which is connected to a radio subscriber unit (FTG), between this radio concentrator (F1) and the radio subscriber unit (FTG), and between the radio subscriber unit (FTG) and a second, adjacent radio concentrator (F2) is determined in relation to the synchronous transmission phase of the second radio concentrator in the radio measurement receiver of the second radio concentrator (F2), and in that the propagation time (b) and thus the distance between the radio subscriber unit (FTG) and the second radio concentrator (F2) are determined from the difference between the sum of the propagation times (a + b) and the propagation time of the signal (a) between the radio subscriber unit (FTG) and the first radio concentrator (F1) determines, and in that, taking into account the assessment dimensions, a connection change-over is caused as soon as the mobile subscriber crosses the radio zone boundary to the radio zone of the second radio concentrator (F2).

5. Radio network according to Claim 4, characterised in that the propagation time (a) between the first radio concentrator (F1) and the radio subscriber unit (FTG) is determined in the radio concentrator (F1) by halving the propagation time (a + a) of the signal transmitted by the radio concentrator (F1) and then retransmitted back by the radio subscriber unit (FTG), and in that the propagation time value determined in this manner is relayed from the first radio concentrator (F1) to the subscriber unit (FTG) and from there to the second radio concentrator (F2).

6. Radio network according to one of the preceding claims, characterised in that the assessment dimensions of the radio zones used as the criterion for change-over are larger in size than those used for the change-over in reporting from one radio zone to an adjacent one.

## Revendications

1. Réseau mobile de radiocommunications comportant un certain nombre de concentrateurs hertziens (F) situés dans une disposition spatiale mutuelle réalisée à la manière d'un système cellulaire, et dans lequel respectivement un nombre, prédéterminé de façon fixe, de zones de radiocommunications, qui sont directement voisines les unes des autres et dans lesquelles les canaux de fréquences globalement disponibles se répètent, forment un groupe de zones de radiocommunications, et dans lequel, en outre, au moins la signalisation, rapportée à l'organisation des radiocommunications, est réalisée sous forme numérique entre les concentrateurs hertziens fixes (F) et les postes d'abonnés mobiles (FTG) par l'intermédiaire de canaux d'organisation conçus pour fonctionner en duplex, et dans lequel un récepteur de mesure (FME), dont la commande est intégrée dans le système de synchronisation des concentrateurs hertziens (F), est prévu dans chacun des concentrateurs hertziens (F) muni d'une unité centrale de commande servant à réaliser une commande sélectionnée de radiocommunications, caractérisé par le fait que, pour la détermination de la limite entre deux zones contiguës de radiocommunications, on exécute, à titre de critère de passage d'abonnés mobile (FTG) dans une autre zone de radiocommunications, moyennant l'utilisation du procédé connu en soi de mesure de distances différentielles selon le principe de la comparaison de phase, une mesure relative de distance, qui compare la distance entre l'abonné mobile (FTG) et deux ou plusieurs concentrateurs hertziens (F) par évaluation de la différence de phase des signaux, émis avec la même phase de référence, des concentrateurs hertziens (F), à des valeurs d'évaluation de limites de cellules fixées dans les concentrateurs hertziens (F) et signalées par voie hertzienne, et que, lorsque les postes d'abonnés hertziens (FTG) sont dans l'état prêt à fonctionner, la détermination de la limite des zones de radiocommunications est exécutée dans le canal d'organisation par l'abonné mobile lui-même, et que pour les postes d'abonnés hertziens (FTG), qui sont en communication, cette opération est exécutée dans les canaux de conversation moyennant l'utilisation du récepteur de mesure (récepteur de mesure radioélectrique FME) des concentrateurs hertziens (F).

2. Réseau de radiocommunications suivant la revendication 1, caractérisé par le fait que, lorsque le poste d'abonné hertzien (FTG) se trouve dans l'état prêt à fonctionner, lors de la mesure relative de distance la différence du temps de propagation des signaux possédant la même phase de référence, qui sont émis par les concentrateurs hertziens (F) dans les créneaux temporels du canal d'organisation et qui contiennent des informations concernant les valeurs d'évaluation correspondant à la limite de leurs zones de radiocommunications, conditionnée par le trafic, est comparée, dans le récepteur du poste d'abonné hertzien (FTG), à la valeur estimée de la différence de ces valeurs d'évaluation et, en tant que résultat de cette comparaison, dans le cas d'une signalisation identique de valeurs d'évaluation, la limite des zones de radiocommunications est détectée comme étant une droite passant par le point médian entre deux concentrateurs hertziens (F1,F2) et, dans le cas d'une signalisation différente des valeurs d'évaluation, cette limite est détectée comme étant une hyperbole, dont le sommet (C1,C2) est décalé, conformément à la demi-différence des valeurs d'évaluation, d'un côté ou de l'autre de la médiatrice, dans le cas de valeurs identiques d'évaluation.

3. Réseau de radiocommunications suivant la revendication 2, caractérisé par le fait que des concentrateurs hertziens déterminés (F) prescrivent les valeurs d'évaluation des concentrateurs hertziens (F) disposés alentour, aux abonnés (TLG) situés près de ces concentrateurs.

4. Réseau de radiocommunications suivant la revendication 1, caractérisé par le fait que lors de la mesure active de distance, dans le cas de postes d'abonnés hertziens (FTG), qui sont en fonctionnement, le temps de propagation somme ($\Delta t=a+b$) du signal d'un premier concentrateur hertzien (F1) en communication avec un poste d'abonné hertzien (FTG), entre ce concentrateur hertzien (F1) et le poste d'abonné hertzien (FTG) et un second concentrateur hertzien voisin (F2) est déterminé en rapport avec la phase d'émission synchrone du second concentrateur hertzien dans le récepteur de mesure radiologique du second concentrateur hertzien (F2), et que le temps de propagation (b) et par conséquent la distance entre le poste d'abonné hertzien (FTG) et le second concentrateur hertzien (F2) est déterminé à partir de la différence du temps de propagation somme (a+b) et du temps de propagation du signal (a) entre le poste d'abonné hertzien (FTG) et le premier concentrateur hertzien (F1), et qu'une commutation de communication est déclenchée en tenant compte des valeurs d'évaluation, dès que l'abonné mobile franchit la limite de la zone de radiocommunications pour passer dans la zone de radiocommunications du second concentrateur hertzien (F2).

5. Réseau de radiocommunications suivant la revendication 4, caractérisé par le fait que le temps de propagation (a) entre le premier concentrateur hertzien (F1) et l'appareil d'abonné hertzien (FTG) est déterminé dans le concentrateur hertzien (F) par division par deux du temps de propagation (a+a) du signal émis par le concentrateur hertzien (F1) et à nouveau renvoyé par le poste d'abonné hertzien (FTG), dans le concentrateur hertzien (F1), et que la valeur du temps de propagation ainsi déterminé est retransmise du premier concentrateur hertzien (F1) au poste d'abonné (FTG) et de ce dernier au second concentrateur hertzien (F2).

6. Réseau de radiocommunication suivant l'une des revendications précédentes, caractérisé par le fait que les valeurs d'évaluation des zones de radiocommunications sont, à titre de critère pour la commutation, dimensionnées avec des dimensions plus importantes que les valeurs d'évaluation pour le renvoi de signalisation d'une zone de radiocommunications à une zone voisine de radiocommunications.

## FIG 1

FTG 1 $(\Delta\varphi<0)$

FTG 2 $(\Delta\varphi=0)$

FTG 3 $(\Delta\varphi>0)$

Mittellinie

## FIG 2

detektierte Funkzonengrenze

FIG 3

$R_1 < R_2$
$\Delta < 0$

$R_1 = R_2$
$\Delta = 0$

$R_1 > R_2$
$\Delta > 0$

$\Delta = R_1 - R_2$

$R_1$

$R_1$

$R_2$

$R_2$

$F_1$ $C_1$ $M$ $C_2$ $F_2$

$R_1$

$R_2$

$M = $ Mittelpunkt

$-\Delta/2$ $-\Delta/2$

FIG 4

7

2

6

1

3

5

4

# FIG 5

FIG 6

# FIG 7

# FIG 8

# FIG 9